Europäisches Patentamt

European Patent Office

Office européen des brevets

(11) Veröffentlichungsnummer: **0 137 096**
**B1**

# EUROPÄISCHE PATENTSCHRIFT

(45) Veröffentlichungstag der Patentschrift:
**14.09.88**

(21) Anmeldenummer: **84103472.1**

(22) Anmeldetag: **29.03.84**

(51) Int. Cl.⁴: **B 60 G 11/42,** F 16 F 1/30,
**B 61 F 5/30**

(54) **Elastische Lagerung von Blattfederenden für Strassen- und Schienenfahrzeuge.**

(30) Priorität: **13.09.83 DE 3332952**

(43) Veröffentlichungstag der Anmeldung:
**17.04.85 Patentblatt 85/16**

(45) Bekanntmachung des Hinweises auf die Patenterteilung:
**14.09.88 Patentblatt 88/37**

(84) Benannte Vertragsstaaten:
**AT DE FR GB IT**

(56) Entgegenhaltungen:
**WO - A - 82/02172**
**DE - A - 3 152 653**
**FR - A - 2 174 516**
**US - A - 1 789 725**
**US - A - 1 825 352**
**US - A - 2 635 869**
**US - A - 2 831 674**

**PATENTS ABSTRACTS OF JAPAN, Band 6, Nr. 184
(M-157) [1062], 21. September 1982; & JP - A - 57 90 438
(HINO JIDOSHA KOGYO K.K.) 05-06-1982
PATENTS ABSTRACTS OF JAPAN, Band 7, Nr. 98
(M-210) [1243], 26. April 1983; & JP - A - 58 21 036 (HINO
JIDOSHA KOGYO K.K.) 07-02-1983**

(73) Patentinhaber: **Jörn, Frieda, Porschestrasse 10,
D-7012 Fellbach (DE)**

(72) Erfinder: **Jörn, Raoul, Post Wasserburg a.B.,
D-8992 Hengnau Nr. 53 1/7 (DE)**

(74) Vertreter: **Neubauer, Hans-Jürgen, Dipl.-Phys.,
Fauststrasse 30, D-8070 Ingolstadt (DE)**

ACTORUM AG

## Beschreibung

Die Erfindung betrifft eine elastische Lagerung für Blattfederenden gemäss dem Oberbegriff des Anspruchs 1.

Es ist eine elastische Lagerung für ein festes Blattfederende bekannt (DE-A-3 152 653), bei der das Blattfederende zu einem zylindrischen Körper geformt ist, dessen Achse quer zur Federlänge verläuft. Dieser zylindrische Körper ist von einer Gummibuchse an den Zylinderflächen und teilweise an den Stirnflächen umschlossen, wobei die Gummibuchse einen Querschlitz für den Durchgang der Feder enthält. Die Gummibuchse ist mit Hilfe von zwei das Aussengehäuse bildenden Lagerschalen radial zusammengespannt.

Das Federende ist damit im Aussengehäuse bzw. in der Gummibuchse elastisch gelagert. Dadurch wird die Geräuschübertragung von der Blattfeder auf das Fahrgestell weitgehend gedämpft. Das andere, freie Blattfederende ist in bekannter Weise für einen Längenausgleich beim Einfedern beweglich zu gestalten. Eine Aussage, wie dies durchzuführen ist, enthält dieser Stand der Technik nicht.

Eine einfache Gleitlagerung für ein freies Blattfederende in Verbindung mit einer gattungsgemässen Lagerung für das feste Blattfederende ist ebenfalls bekannt (US-A-2 831 674). Die dafür erforderliche Gleitplatte muss ersichtlich stabil und abriebfest sein und kann daher kaum elastische Eigenschaften mit einer gewünschten Geräuschdämpfung aufweisen. Auch in einer weiter bekannten Ausführung (JP-A-5 821 036) ist das freie Blattfederende lediglich entsprechend an einer halbrunden Platte gleitend abgestützt. Auch bei einer weiteren bekannten Ausführung (JP-A-5 790 438) ist ein Blattfederende zylindrisch ausgebildet und als festes Blattfederende in umgreifenden Lagerteilen gehalten. Die Lagerung des anderen beweglichen Blattfederendes ist hier über eine aufwendige Wippe durchgeführt.

Aufgabe der Erfindung ist es demgegenüber, eine geeignete Lagerung für das bewegliche, freie Blattfederende zur Verfügung zu stellen, mit dem insbesondere eine Akustikverbesserung erreichbar ist.

Diese Aufgabe wird mit den Merkmalen des Anspruchs 1 gelöst.

Gemäss Anspruch 1 wird für die Lagerung des freien Blattfederendes ebenfalls ein zylindrischer Körper vorgeschlagen, der jedoch nicht fest mit dem Blattfederende verbunden ist, sondern durch die Lagerschalen und die zylindrische Gummi-Metall-Buchse gehalten ist und einen durchgehenden Schlitz enthält. Dieser Schlitz setzt sich durch die gesamte Gummi-Metall-Buchse, auch durch die beiden Lagerhalbschalen, fort, wodurch eine Durchgangsöffnung für das freie Blattfederende für ein gleitendes Verschieben zum Längenausgleich gebildet ist. Dadurch wird eine geeignete Lagerung für das freie Blattfederende erreicht, die eine verbesserte Akustik bzw. geringere Geräuschübertragung entsprechend der vorbeschriebenen, bekannten Lagerungen für ein festes Blattfederende aufweist.

Konstruktiv zweckmässig wird die Gummi-Metall-Buchse gemäss Anspruch 2 aus zwei Gummi-Metall-Halbschalen gebildet.

In einer zweckmässigen Ausführung gemäss Anspruch 3 ist der zylindrische Körper aus zwei, auf die Blattfeder aufgesetzte, konzentrische Zylinderhälften aus Metall oder Kunststoff gebildet, deren Radien ihren Mittelpunkt in der Blattfedermitte haben.

Aus Anspruch 4 ist zu ersehen, dass die erfindungsgemässe Lagerung auch mit zwei aufeinanderliegenden und einander abstützenden Blattfederenden durchgeführt werden kann. Die Achsen der halbzylindrischen Körper können hier auf den Trennebenen zwischen diesen und den äusseren Blattfederflächen liegen.

Mit Anspruch 5 wird vorgeschlagen, dass die Radien der aufgesetzten, halbzylindrischen Körper und der Gummi-Metall-Halbschalen bei gleichem Mittelpunkt oben und unten verschieden gross sind. Hiermit kann die Lagerung an unterschiedliche Gegebenheiten, insbesondere an eine statische Vorlast, angepasst werden.

Mit den Merkmalen des Anspruchs 6, die den Blattfederenden zugewandten Auflageflächen der halbzylindrischen Körper mit Gleitschichten zu versehen und die Blattfederenden zwischen diesen verschiebbar zu lagern, wird erreicht, dass die Blattfederenden zum Längenausgleich beim Einfedern im Lager leichter verschiebbar sind. Ein gewisser Längenausgleich bei kleineren Einfederwegen wird durch die Elastizität des Gummis vom Lager aufgenommen, erst bei grösseren Federwegen oder grosser statischer Vorlast wird das Blattfederende im Lager verschoben.

Nach Anspruch 7 sollen die mit einer Gleitschicht versehenen Auflageflächen eine schwache Wölbung aufweisen. Dadurch wird gewährleistet, dass die Federenden weitgehend flächig auf der Gleitschicht und nicht auf einer Querkante der halbzylindrischen Körper verschoben werden.

Mit Anspruch 8 werden die Ebenen angegeben, in denen die äusseren Gehäuseschalen zweckmässig geteilt sein können. Die Formgebung der Lagerteile muss dabei so ausgeführt sein, dass beim Zusammenspannen der Gehäuseschalen eine Druckspannung in den Gummimetallteilen aufgebracht wird.

Dies wird auch durch die in Anspruch 9 beanspruchte tonnenförmige Wölbung der Aussenflächen an den aufgesetzten Halbzylindern erreicht.

Nach Anspruch 10 können die Halbzylinder im Querschnitt auch eine annähernd elliptische Form oder Spindelform aufweisen. Je nach Formgebung können die Lagereigenschaften in gewissen Grenzen verändert und den jeweiligen Erfordernissen angepasst werden.

Eine vorteilhafte Ausführungsform der Gummi-Metall-Halbschalen hat Anspruch 11 zum Inhalt. Bei den Gummi-Metall-Halbschalen sollen an den Rändern auf die innere und äussere Fläche dünnwandige Metallbleche aufvulkanisiert sein. Diese Metallbleche sollen sich im zusammengespannten Zustand an den äusseren Lagerschalen, den inneren Halbzylindern oder direkt am Blattfederende abstützen. Dadurch wird ein Teil des Gummivolumens verdrängt und ein vom Gummi auf das Aussengehäuse und den zylindrischen Körper wirkender hoher Anpressdruck hervorgerufen, der die Reibungshaftung bewirkt. Durch die aufvulkanisierten Blechstreifen wird eine Querdehnung des Gummis bei Belastung weitgehend vermieden. Die Verschiebung der Blechstreifen in Richtung auf den Gummikörper beim Zusammenspannen der Lagerschalen wird so bemessen, dass die Gummi-Metall-Halbschalen auch bei den grössten zu erwartenden Belastungen unverschiebbar an die Lagerschalen bzw. den zylindrischen Körper gedrückt werden. Hierzu werden die Gummi-Metall-Halbschalen bei der Montage ohne Kraftaufwand in die Lagerschalen eingelegt und dann einfach zusammengespannt. Wegen der kleinen Masse der Metallblechstreifen sind die Vulkanisierzeiten kurz und die Haftfestigkeitswerte besonders gut.

Anhand einer Zeichnung werden verschiedene Ausführungsbeispiele der Erfindung mit weiteren Merkmalen, Einzelheiten und Vorteilen näher dargestellt.

Es zeigen

Fig. 1 ein Blattfederlager für ein freies Blattfederende in einem Schnitt zur Blattfederrichtung,

Fig. 2 einen Querschnitt durch das Lager der Fig. 1,

Fig. 3 eine Draufsicht auf das Lager nach Fig. 1.

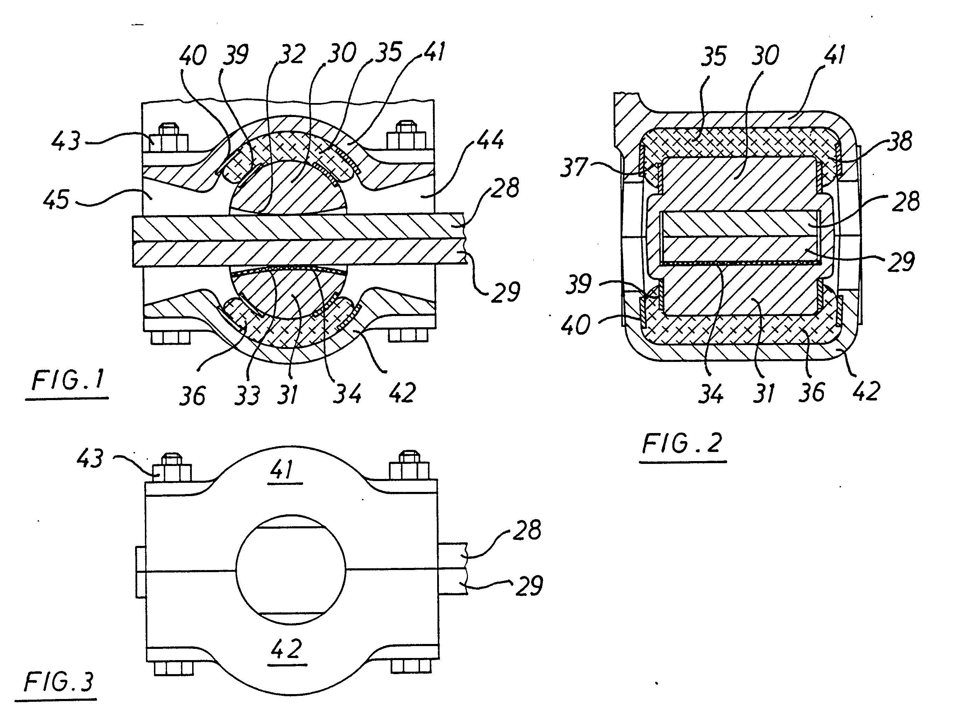

Die in den Fig. 1 bis 3 dargestellte Ausführungsform, bei der ein Blattfederende 28, 29 im Lager verschiebbar ist, ist für die Lagerung eines freien Blattfederendes 28, 29 vorgesehen.

Auf zwei aneinanderliegenden Blattfederenden 28, 29 sind zwei Zylinderhälften 30, 31 aufgesetzt. Die Zylinderhälften 30, 31 umfassen stirnseitig die Blattfederenden 28, 29. Es könnte sich auch (wie in Fig. 9 dargestellt) um einen ganzen Zylinder handeln, in dem ein durchgehender Schlitz zum Einführen der Blattfederenden 28, 29 angebracht ist. Die Anlageflächen 32, 33 der Blattfederenden 28, 29 in den Zylinderhälften 30, 31 haben eine schwache Wölbung in Richtung auf die Blattfederenden. Die untere Anlagefläche 33 ist mit einer Gleitschicht 34 versehen.

Auf die Zylinderhälften 30, 31 sind Gummi-Metall-Halbschalen 35, 36 aufgesetzt, die mit stirnseitig angearbeiteten Flächen 37, 38 über die Stirnseiten der Zylinderhälften 30, 31 reichen. Innere und äussere Blechstreifen 39, 40 sind gegen ein Verschieben durch Gummiquerausdehnung an Ansätzen an den Zylinderhälften 30, 31 und an Lagerschalen 41, 42 gesichert.

Die Gummi-Metall-Halbschalen werden unter Vorspannung von den Lagerschalen 41, 42 umschlossen, die mit Verschraubungen 43 zusammengespannt sind. An der oberen Lagerschale 41 ist eine vertikale Pratze 44 angeformt, mit der das Lager an einem Fahrzeug befestigt werden kann. Die Lagerschalen 41, 42 sind so ausgebildet, dass in der horizontalen Querrichtung Schlitze 44, 45 gebildet sind, durch die die Blattfederenden 28, 29 geführt sind und die so gross bemessen sind, dass sie den maximalen Ausschlag der Blattfederenden nicht begrenzen.

In Fig. 3 ist eine Draufsicht auf das Lager gemäss Fig. 1 dargestellt, in der die stirnseitige Ausbildung der Lagerschalen 41, 42 zu erkennen ist.

Das Lager nach Fig. 1 bis 3 hat folgende Funktion: Bei nur geringen Federwegen sind die eingeklemmten Blattfederenden 28, 29 so zu betrachten, wie wenn sie an den Zylinderhälften 30, 31 festgemacht wären. Ein geringer Ausgleich der Blattfederlänge beim Einfedern kann im Lager vom Gummi aufgenommen werden. Bei grösseren Einfederungen dagegen verschieben sich die Blattfederenden 28, 29 entlang der Gleitschicht 34.

Es wird eine Lagerung für Blattfederenden zur Verfügung gestellt, die bei kleinem Rückstellmoment auch für schwere Fahrzeuge geeignet ist, die sowohl Brems- und Anfahrkräfte als auch Seitenkräfte bei Kurvenfahrten für eine gute Achsführung aufnimmt und weitgehend verschleissfrei ist.

**Patentansprüche**

1. Elastische Lagerung von Blattfederenden (28, 29) für Strassen- und Schienenfahrzeuge, bestehend aus einem zwischen Blattfederende (28, 29) und dessen Lagerbock angeordneten Gummi-Metall-Drehschubelement, wobei das Blattfederende (28, 29) in einem zylindrischen Körper (30, 31) gelagert ist, dessen Achse quer zur Federlänge verläuft, und dieser zylindrische Körper (30, 31) von einer zum Durchgang der Feder mit einem Schlitz versehenen Gummi-Metall-Buchse (35, 36) umschlossen ist, die Gummi-Metall-Buchse (35, 36) mit stirnseitig angearbeiteten Flächen die Stirnflächen des zylindrischen Körpers (30, 31) zumindest teilweise bedeckt, und der so gebildete ebenfalls zylindrische Körper in zwei das Aussengehäuse bildende metallische Lagerschalen (40, 41) eingesetzt ist, die zur kraftschlüssigen Befestigung der Gummi-Metall-Buchse (35, 36) radial gegeneinander zusammengespannt sind, dadurch gekennzeichnet, dass der zylindrische Körper (30, 31) mit einem durchgehenden Schlitz versehen ist, der sich durch die Gummi-Metall-Buchse (35, 36) fortsetzt und der zur Aufnahme eines freien Blattfederendes geeignet ist, wobei ein Längenausgleich der Blattfeder (28, 29) beim Einfedern durch gleitendes Verschieben des freien Blattfederendes im Schlitz durchführbar ist.

2. Elastische Lagerung nach Anspruch 1, dadurch gekennzeichnet, dass die Gummi-Metall-Buchse aus zwei Gummi-Metall-Halbschalen (35, 36) gebildet ist.

3. Elastische Lagerung nach Anspruch 1 oder 2, dadurch gekennzeichnet, dass der an den Enden der Blattfeder (28, 29) liegende zylindrische Körper aus zwei, auf die Blattfeder (28, 29) aufgesetzten, konzentrischen Zylinderhälften (30, 31) aus Metall oder Kunststoff besteht, deren Radien ihren Mittelpunkt in der Blattfedermitte haben.

4. Elastische Lagerung nach Anspruch 1, dadurch gekennzeichnet, dass zwei aufeinanderliegende und einander abstützende Blattfederenden (28, 29) mit je einem aufgesetzten von je einer Gummi-Metall-Halbschale (35, 36) umschlossenen halbzylindrischen Körper (30, 31) verbunden sind, wobei die Achsen der halbzylindrischen Körper (30, 31) auf den Trennebenen zwischen diesen und den äusseren Blattfederflächen liegen.

5. Elastische Lagerung nach einem der Ansprüche 1, 2 oder 4, dadurch gekennzeichnet, dass die Radien der aufgesetzten, halbzylindrischen Körper (30, 31) und der Gummi-Metall-Halbschalen (35, 36) bei gleichem Mittelpunkt oben und unten verschieden gross sind.

6. Elastische Lagerung nach einem der Ansprüche 1 bis 5, dadurch gekennzeichnet, dass die halbzylindrischen Körper (31) an ihren der Blattfeder (29) zugewandten Auflageflächen (33) mit Gleitschichten (34) versehen sind und die Blattfederenden (29) zwischen diesen verschiebbar sind.

7. Elastische Lagerung nach Anspruch 6, dadurch gekennzeichnet, dass die mit einer Gleitschicht (34) versehene Auflagefläche (33) der halbzylindrischen Körper (31) eine schwache Wölbung aufweist, deren Krümmungsradius mehr als das 5-fache des Aussenradius des Halbzylinders beträgt.

8. Elastische Lagerung nach einem der Ansprüche 1 bis 7, dadurch gekennzeichnet, dass die äusseren Gehäuseschalen (41, 42) in der horizontalen Längsachse oder der vertikalen Längsachse oder der vertikalen Querachse geteilt sind.

9. Elastische Lagerung nach einem der Ansprüche 1 bis 8, dadurch gekennzeichnet, dass der zylindrische Körper (30, 31) an seiner Aussenfläche tonnenförmig gewölbt ist.

10. Elastische Lagerung nach einem der Ansprüche 1 oder 2 oder 5 bis 9, dadurch gekennzeichnet, dass der zylindrische Körper (30, 31) im Querschnitt eine annähernd elliptische Form oder Spindelform hat.

11. Elastische Lagerung nach einem der vorhergehenden Ansprüche, dadurch gekennzeichnet, dass an den Rändern der Gummi-Metall-Halbschalen (35, 36) auf deren innere und äussere Fläche dünnwandige Metallbleche (39, 40) aufvulkanisiert sind.

## Claims

1. Resilient bearing of leaf spring ends (28, 29) for road and rail vehicles, comprising a rubber-metal turning and sliding element arranged between the leaf spring end (28, 29) and its bearing block, the leaf spring end (28, 29) being mounted in a cylindrical body (30, 31), the axis of which runs transverse to the spring length, and this cylindrical body (30, 31) being enclosed by a rubber-metal bush (35, 36) provided with a slot for the passage of the spring, the rubber-metal bush (35, 36) covering at least partially, with surfaces machined on the front face, the front faces of the cylindrical body (30, 31), and the likewise cylindrical body thus formed being inserted in two metallic bearing shells (40, 41) forming the outer housing, said bearing shells being clamped together radially against one another to fix the rubber-metal bush (35, 36) in non-positive manner, characterized in that the cylindrical body (30, 31) is provided with a through slot which continues through the rubber-metal bush (35, 36) and which is suitable for receiving a free leaf spring end, a length compensation of the leaf spring (28, 29) in the course of spring action being feasible by means of sliding displacement of the free leaf spring end in the slot.

2. Resilient bearing according to Claim 1, characterized in that the rubber-metal bush is formed of two rubber-metal half shells (35, 36).

3. Resilient bearing according to Claim 1 or 2, characterized in that the cylindrical body located at the ends of the leaf springs (28, 29) comprises two concentric metal or plastic cylinder halves (30, 31) which are imposed on the leaf springs (28, 29) and whose radii have their centre point in the centre between the leaf springs.

4. Resilient bearing according to Claim 1, characterized in that two leaf spring ends (28, 29), lying one on top of the other and supporting each other, are each connected to an imposed semicylindrical body (30, 31), each of the latter being enclosed by a rubber-metal half shell (35, 36), the axes of the semicylindrical bodies (30, 31) lying on the separation planes between the latter and the outer leaf spring surfaces.

5. Resilient bearing according to any one of Claims 1, 2 or 4, characterized in that, while having the same centre point, the radii of the imposed semicylindrical bodies (30, 31) and of the rubber-metal half shells (35, 36) are different in size at the top and at the bottom.

6. Resilient bearing according to any one of Claims 1 to 5, characterized in that, at their bearing surfaces (33) facing the leaf spring (29), the semicylindrical bodies (31) are provided with slide layers (34) and the leaf spring ends (29) can be displaced between these.

7. Resilient bearing according to Claim 6, characterized in that the bearing surface (33) of the semicylindrical bodies (31), said bearing surface having been provided with a slide layer (34), has a slight convex curvature, the radius of curvature of which is more than five times the outer radius of the semicylinder.

8. Resilient bearing according to any one of Claims 1 to 7, characterized in that the outer housing shells (41, 42) are divided in the horizontal longitudinal axis or the vertical longitudinal axis or the vertical transverse axis.

9. Elastic bearing according to any one of Claims 1 to 8, characterized in that the cylindrical body (30, 31) has a barrel-shaped curvature at its outer surface.

10. Resilient bearing according to any one of Claims 1 or 2 or 5 to 9, characterized in that, in cross-section, the cylindrical body (30, 31) has an approximately elliptical shape or spindle shape.

11. Resilient bearing according to any one of the preceding claims, characterized in that thin-walled sheet metal pieces (30, 40) are vulcanized onto the inner and outer surface of the rubber-metal half shells (35, 36) at the edges of the latter.

# Revendications

1. Dispositif de montage élastique des extrémités de lames de ressort (28, 29) pour véhicules routiers et ferroviaires, se composant d'un élément de torsion-cisaillement en métal-caoutchouc disposé entre l'extrémité du ressort à lames (28, 29) et son support, l'extrémité du ressort à lames (28, 29) étant montée dans un corps cylindrique (30, 31) dont l'axe est dirigé perpendiculairement à la longueur du ressort et ce corps cylindrique (30, 31) étant entouré par une douille en métal-caoutchouc (35, 36) munie d'une fente pour le passage du ressort, la douille en métal-caoutchouc (35, 36) recouvrant au moins en partie, par des surfaces rabattues du côté frontal, les surfaces frontales du corps cylindrique (30, 31), et le corps également cylindrique ainsi formé étant inséré dans deux coquilles de support métalliques (40, 41) qui constituent le boîtier extérieur et qui sont assemblées par serrage radial l'une contre l'autre pour la fixation par serrage de la douille en métal-caoutchouc (35, 36), caractérisé en ce que le corps cylindrique (30, 31) est muni d'une fente continue qui se poursuit à travers la douille en métal-caoutchouc (35, 36) et qui est propre à recevoir une extrémité libre du ressort à lames, une compensation de longueur du ressort à lames (28, 29) lors de la compression du ressort pouvant être effectuée par déplacement glissant de l'extrémité libre du ressort à lames dans la fente.

2. Dispositif de montage élastique selon la revendication 1, caractérisé en ce que la douille en métal-caoutchouc est constituée par deux demi-coquilles en métal-caoutchouc (35, 36).

3. Dispositif de montage élastique selon la revendication 1 ou 2, caractérisé en ce que le corps cylindrique placé aux extrémités des lames de ressort (28, 29) se compose de deux moitiés de cylindre concentriques (30, 31) en métal ou en matière plastique qui sont rapportés sur le ressort à lames (28, 29) et dont les rayons ont leur centre au milieu du ressort à lames.

4. Dispositif de montage élastique selon la revendication 1, caractérisé en ce que deux extrémités des lames de ressort (28, 29) superposées et prenant appui l'une sur l'autre sont raccordées chacune à un corps demi-cylindrique rapporté (30, 31), entouré par une demi-coquille en métal-caoutchouc (35, 36), les axes des corps demi-cylindriques (30, 31) étant situés dans les plans de séparation entre ces corps et les surfaces extérieures des lames de ressort.

5. Dispositif de montage élastique selon l'une quelconque des revendications 1, 2 et 4, caractérisé en ce que les rayons des corps demi-cylindriques rapportés (30, 31) et des demi-coquilles en métal-caoutchouc (35, 36) ont des grandeurs différentes en haut et en bas avec un centre commun.

6. Dispositif de montage élastique selon l'une quelconque des revendications 1 à 5, caractérisé en ce que les corps demi-cylindriques (31) sont garnis, sur leurs surfaces d'appui (33) dirigées vers les lames de ressort (29), de couches de glissement (34) et en ce que les extrémités des lames de ressort (29) peuvent se déplacer entre ces couches.

7. Dispositif de montage élastique selon la revendication 6, caractérisé en ce que la surface d'appui (33) des corps demi-cylindriques (31), garnie d'une couche de glissement (34), présente un faible bombement dont le rayon de courbure s'élève à plus de 5 fois le rayon extérieur du demi-cylindre.

8. Dispositif de montage élastique selon l'une quelconque des revendications 1 à 7, caractérisé en ce que le boîtier extérieur est partagé en coquilles (41, 42) le long de l'axe longitudinal horizontal, de l'axe longitudinal vertical ou de l'axe transversal vertical.

9. Dispositif de montage élastique selon l'une quelconque des revendications 1 à 8, caractérisé en ce que le corps cylindrique (30, 31) est bombé en forme de barillet sur sa surface extérieure.

10. Dispositif de montage élastique selon l'une quelconque des revendications 1, 2 et 5 à 9, caractérisé en ce que le corps cylindrique (30, 31) a en coupe transversale une forme approximativement elliptique ou une forme de fuseau.

11. Dispositif de montage élastique selon l'une quelconque des revendications 1 à 10, caractérisé en ce que des tôles métalliques minces (39, 40) sont fixées par vulcanisation aux bords des demi-coquilles en métal-caoutchouc (35, 36), sur les surfaces intérieures et extérieures de celles-ci.

FIG.2

FIG.1

FIG.3